# EUROPEAN PATENT APPLICATION

(11) **EP 2 911 085 A1**
(43) Date of publication of application: **26.08.2015**
(21) Application number: 13846347.6
(22) Date of filing: 04.10.2013
(51) Int. Cl.: G06F 21/73, G06F 21/12

(54) **METHOD FOR LIMITING AND ENSURING THE OPERABILITY AND OPERATION OF A UNIQUE COMPUTER PROGRAM, EXCLUSIVELY WITH THE COMPUTER EQUIPMENT WHEREIN IT IS INSTALLED**

(30) Priority: 18.10.2012 ES 201231602
(71) Applicant: Navista S.a.r.l., 08007 Barcelona (ES)
(72) Inventor: VINEGLA, Jean, F-66000 Perpignan (FR); BIAL, Emmanuel T.A., F-66000 Perpignan (FR); LECLERCQ, Jean Noel G., F-66000 Perpignan (FR); PINSON, Jean Marc R., F-66000 Perpignan (FR)
(74) Representative: Pereira Toña, Maria Irache
(86) International application number: PCT/ES2013/070687
(87) International publication number: WO 2014/060618

(57) **Abstract**

METHOD TO GUARANTEE AND RESTRICT THE OPERABILITY AND FUNCTIONING OF A COMPUTER PROGRAMME EXCLUSIVELY TO THE SPECIFIC COMPUTER EQUIPMENT WHERE IT IS INSTALLED, which, during the installation of the software in the equipment, includes a process for scanning the hardware present and identifying the parameters that are exclusive to it, in order to obtain the "hardware DNA signature" which is used to generate a K1 key in order to encrypt relevant information for accessing the programme in a ciphered data document and subsequently, the K1 key and data of that relevant access information are deleted, with only the ciphered document being saved.

## Description

### PURPOSE OF THE INVENTION

As set out in the title of this descriptive memorandum, the invention refers to a method which guarantees and restricts the operability and functioning of a computer programme solely and exclusively to the computer equipment where it is installed.

In particular, the purpose of this invention is based on a computer security system which has the objective of enabling the operability and functioning of a computer programme or software solely and exclusively in the computer equipment or electronic device in which it is installed. This guarantees that such software will only operate with that specific equipment and in no other equipment, thus preventing the possibility of unauthorised use being made of that software for security reasons, or in the event of theft, copying or other similar cases.

To that end, the proposed method includes a series of implementation phases which ensure that the software only operates with the hardware present during the installation of the software in the equipment. Furthermore, the proposed method contemplates another phase which entails the use by that software of an encrypted key to enable it to function in the equipment and also a phase to ensure that the encrypted key can only be used if the terms of the first implementation phase are met, i.e., if the hardware is exactly the same and if it has the same specific elements and components as those present during the installation of the software.

### SCOPE OF APPLICATION OF THE INVENTION

The scope of application of this invention is the data processing sector, and in particular, security in using software or computer programmes, computer applications and similar elements.

### BACKGROUND OF THE INVENTION

With respect to the state of the art, it should be said that currently, different protective systems are known to exist which prevent the unauthorised use of computer programmes.

Nonetheless, most of those systems are based on introducing protective elements into the programme itself, to prevent it from being copied. For instance, the use of passwords, identification codes, etc. which, sooner or later, are discovered and/or forged by *"hackers"* or other specialists.

For this reason, in all systems known to date, after overcoming the security measures existing in the programme, it may easily be used in any other equipment in which it is reinstalled, provided that such equipment has the necessary hardware to allow this. The foregoing proves that current systems lack sufficient guarantees in many industrial and commercial sectors.

Thus, the purpose of this invention is the development of a new computer protection system which has the objective of providing much more than just protection for the software itself, in which such protection is extended to the software and the computer equipment, so that the software can only function in the computer equipment, device or appliance for which it is installed and authorised, and in no other equipment, not even equipment with exactly the same hardware.

In other words, the solution proposed in this invention for solving the problem of existing systems is to ensure that the software installed in a piece of equipment is connected solely and exclusively to that equipment, and that it cannot be separated from the specific hardware of that equipment and used in any other piece of equipment or appliance.
Consequently, if the software is stolen, it will not be able to operate separately from the hardware to which it was connected during its installation process.

Furthermore, it should be mentioned that the applicant, at least, is not aware of the existence of any other method to guarantee and restrict the operability and functioning of a computer programme solely and exclusively to the computer equipment in which it is installed, or of any other invention used for a similar purpose or which has the same or equivalent technical and constitutional characteristics to those included in the method described herein, as is claimed.

### EXPLANATION OF THE INVENTION

The method to guarantee and restrict the operability and functioning of a computer programme exclusively to the computer equipment where it is installed, as proposed by this invention, is configured as an important innovative element within its scope of application, since, in the light of its implementation process, it is well able to guarantee the above objectives satisfactorily. The details of the characteristics that make this possible are duly set out in the final claims attached to this descriptive memorandum.

Specifically, as already set out above, what the invention proposes is a computer security system whereby a specific software element (with the term "software" being considered a computer programme, data-processing programme or an application programmed to execute specific tasks in a computer), will only function with the specific computer equipment in which that software was installed; the term computer equipment refers to any electronic appliance, machine or device that allows software to operate and which thus includes hardware or a set of electronic elements and components such as a CPU, memory (RAM, ROM, HDD, Flash), and communication ports, among others.

To that end, and in particular, the method in question includes the following phases which take place during the installation of the: scanning of the hardware existing in that equipment during the installation process and identification of the hardware-specific parameters, in order to obtain what is known as the "hardware DNA signature" which make it unique and different from any other. Then a key is generated, using that hardware DNA signature obtained as described above, and a mathematical function plus a fixed number. That key is used to encrypt some of the relevant access information of the programme in a document containing ciphered data, such as passwords, private keys, licence codes, etc. Once that information has been encrypted, both the key and the programme access information are deleted, and only the ciphered document is saved.

Therefore, in order to use the programme for which purpose the encrypted document must be opened, that document may only be decrypted by generating the key again, which in turn, can only be generated using the hardware DNA signature of the equipment, which can only be obtained if it is actually the same equipment in which the software was installed, with the same hardware present as the hardware existing when that software was installed in it.

The above-described method to guarantee and restrict the operability and functioning of a computer programme exclusively to the computer equipment where it was installed is therefore an innovation with structural and constitutional characteristics that are hitherto unknown with respect to the purpose for which it is intended, and this, along with its practical usefulness, give it sufficient grounds to obtain the privilege of exclusivity that is being sought.

### DESCRIPTION OF THE FIGURES

To complete the description given herein, and with the aim of helping to allow the invention method to be better understood, a set of figures is attached to this descriptive memorandum, as an inseparable part thereof, showing the following:
Figures 1 a and 1 b show the respective parts of the flow chart of phase one of the method described in the invention, which includes the process for obtaining the initial equipment matrix. In those parts, references (a) and (b) show the continuity of the flow lines between both.
Figure 2 contains a flow chart showing the process for obtaining the final matrix indicated in phase two of the foregoing method.
Figure 3 is a flow chart showing phase three of the method that includes the process of generating the K1 key.
Figure 4 is a flow chart showing the process described in phase four of the invention method, in which the document with the information for accessing the programme is encrypted.

### DETAILED DESCRIPTION OF THE INVENTION

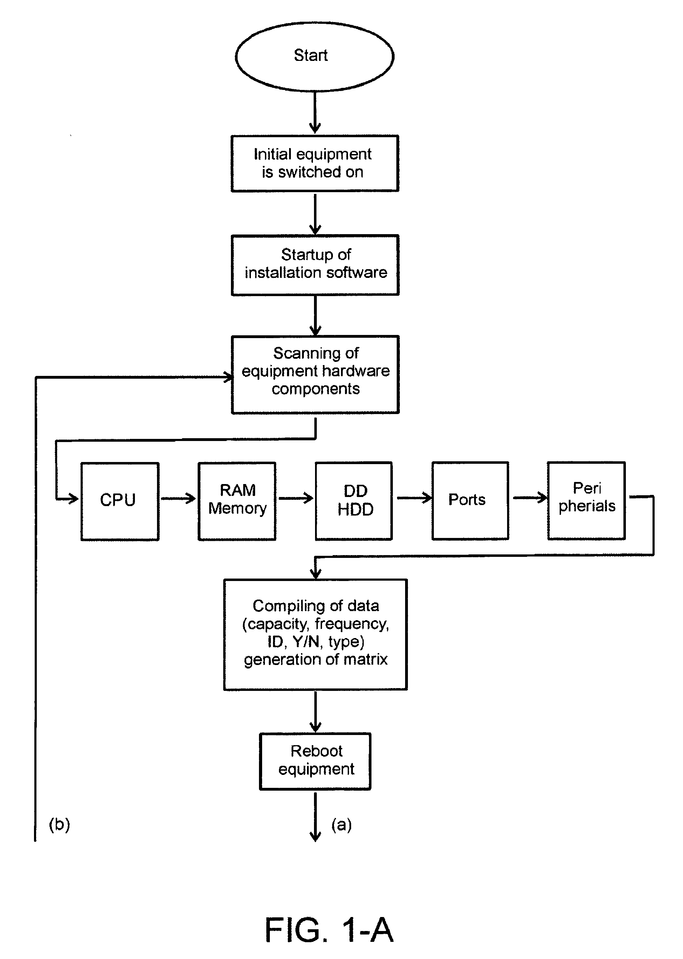

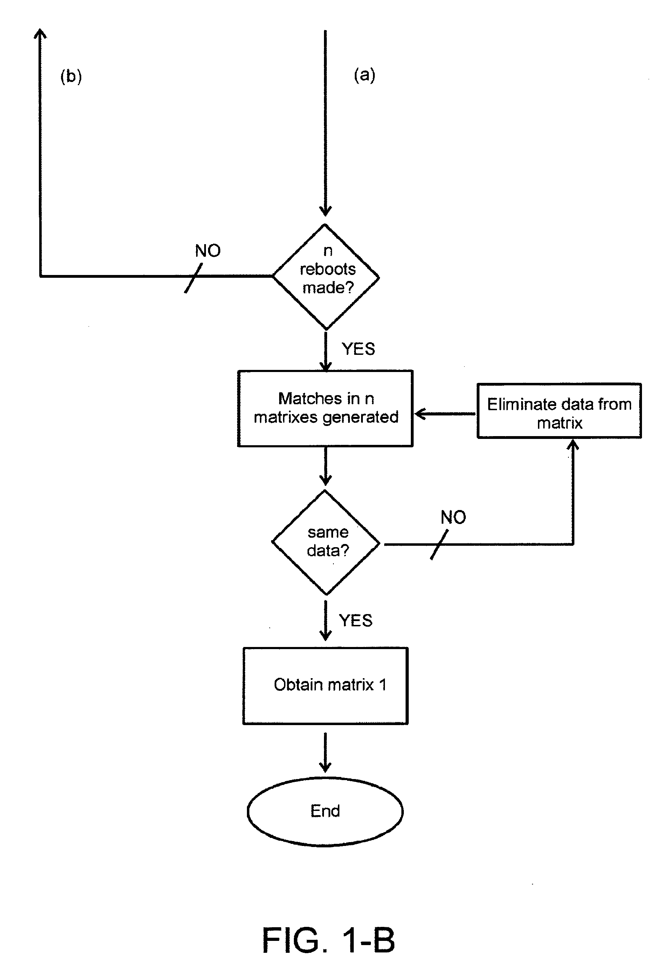

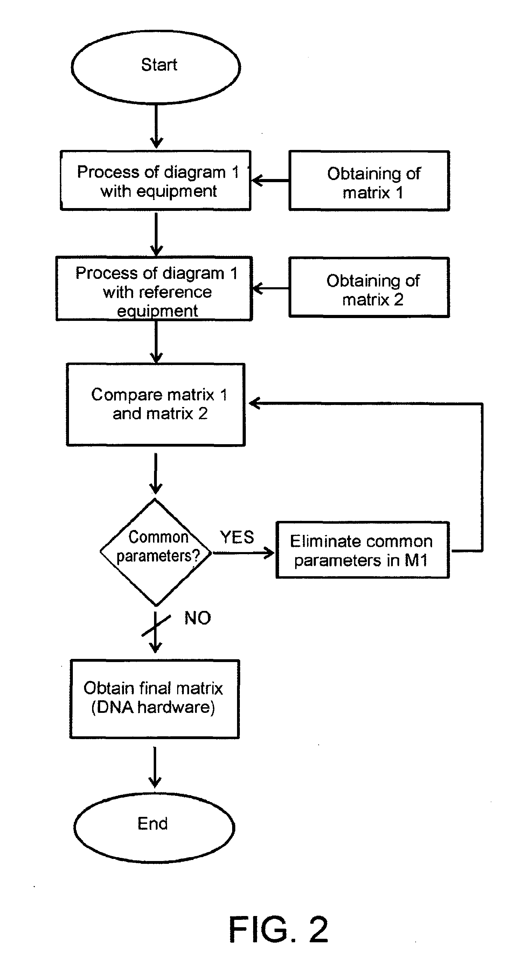

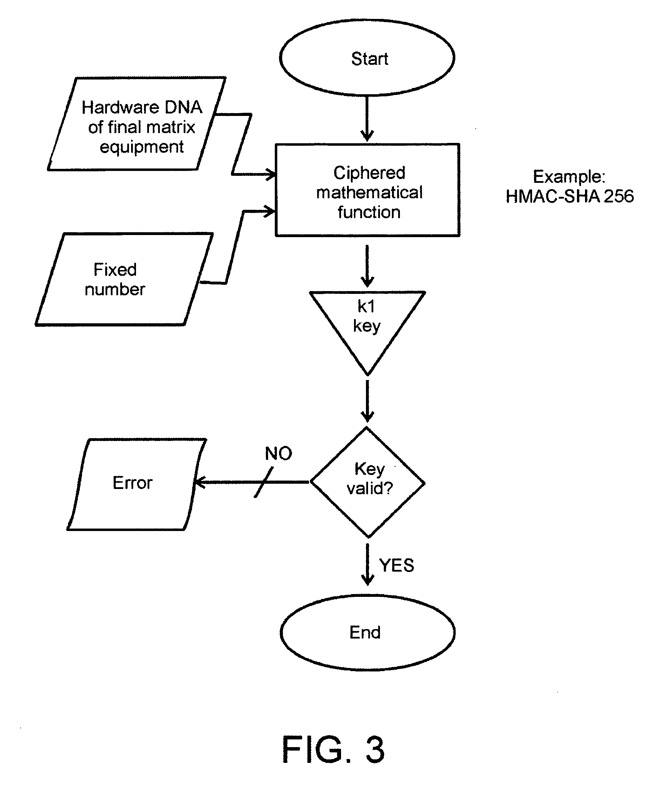

In the light of the above charts, it is observed that the proposed method includes a series of phases for implementing the security system; these are carried out during the process of installing the software in the equipment, and described in detail below:
- Phase one:
   While the computer programme is being installed in the equipment, the installation software of that programme is programmed to examine all the equipment hardware (processor, communication ports, etc.) and define a series of parameters (such as the capacity, frequency, IP address, user ID, serial number, type, make, etc.) which are constant and only found in that equipment. This set of constant, exclusive parameters will determine what will be called the "equipment hardware DNA", as they constitute the identifying signature which makes that specific equipment unique.
   To obtain that DNA signature, a re-examination process of the above parameters is executed, which generates n matrixes with the data obtained, in order to eliminate from them all parameters that are not repeated and keep only those that are always identical, thereby generating a single equipment matrix.(figures 1-A and 1-B)
- Phase two:
   During the system implementation process, the procedure carried out on the equipment in phase one is applied in parallel to a similar piece of reference equipment, the result of which is the creation of two matrixes: an initial matrix, or matrix 1, with the singular parameters of the equipment in which the system is implemented, and a reference matrix (matrix 2), with the parameters of the hardware of that reference equipment. All the above is carried out in order to eliminate from the initial matrix (matrix 1) all the parameters that are also common to the reference (matrix 2), thereby obtaining a final matrix (matrix F) with the parameters that truly correspond to the equipment, thus constituting the DNA signature that identifies the equipment hardware (figure 2).
- Phase three:
   After obtaining the DNA signature of the equipment hardware, the installation software generates a key (K1 key) using the DNA signature of the hardware obtained with that final matrix and an encrypted formula (e.g., an algorithm such as HMAC-SHA 256) plus a fixed number (figure 3).
- Phase four:
   During the system implementation process, some relevant information enabling access to the programme, such as passwords, private RSD keys, licence codes, etc. are encrypted using the K1 key; it should be remembered that the K1 key is closely linked to the DNA signature of the equipment hardware and it is therefore only valid for that equipment.

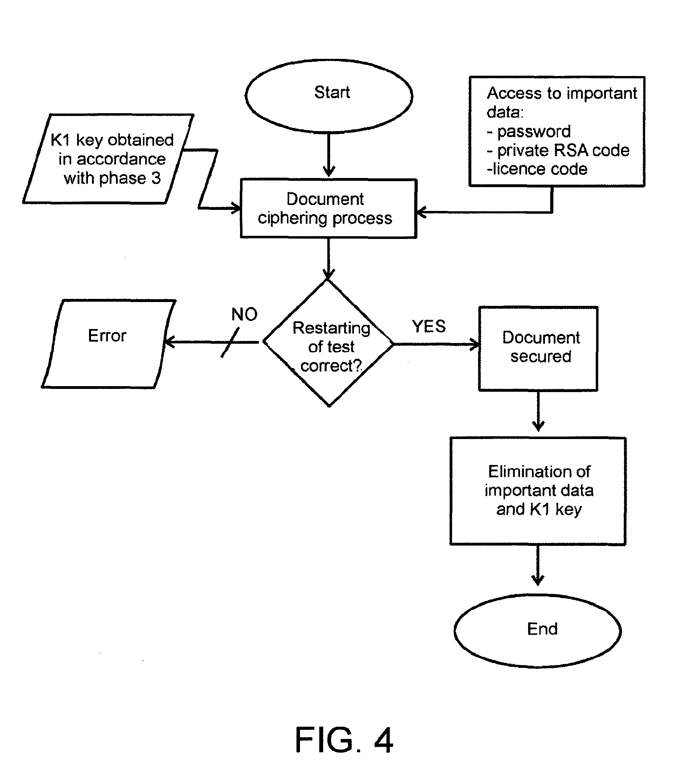

Lastly, both the K1 key and the database containing relevant access information are eliminated and only the encrypted document with the data related to the important access information is stored in the equipment (figure 4).

All the above completes the implementation of the security system which ensures and restricts the operability and functioning of the computer programme exclusively in the specific computer equipment where it was installed.

When the user tries to operate the programme with the equipment where it is installed, after implementing the security system in it, that programme executes a process through which the K1 key is regenerated, and recalculates the DNA signature of the hardware. The equipment uses the K1 key to decipher the encrypted document it will need to access the information stored and operate normally, for instance, to open a VPN *(Virtual Private Network*) connection with another piece of equipment.

In this way, if for any reason anyone should try to open, use or make the programme work in any other equipment, appliance or device, since the conditions for it to regenerate the K1 key have not been met (because the DNA signature of the software in the other equipment is not the same), the programme cannot decrypt the document containing the access information and so it will not work. Moreover, since both the data and the key that opens the document have been deleted, they cannot be "hacked".

In summary, to be specific, the method to guarantee and restrict the operability and functioning of a computer programme exclusively to the computer equipment where it was installed that is proposed by the invention includes an implementation phase to ensure that the software will only function with the hardware that was present during the installation of the software in the equipment, for which purpose when the software is installed, a process that scans the hardware of the equipment is executed, to obtain its DNA signature; to that end, the parameters that are present and exclusive to it are identified. Likewise, the proposed method includes another phase which ensures that to be able to operate in that piece of equipment, that software uses an encrypted key, with it being possible to use that key only if what is set out in phase one of the implementation is met, i.e., if the hardware is exactly the same, and if it has the same specific elements and components as the ones present during the software installation phase. To that end, the key is generated using the DNA signature obtained during phase one of the implementation process, through which the relevant information for obtaining access is encrypted in a closed document, and both that information and the key are eliminated, so that every time the programme is used, it must regenerate the key using the DNA of the equipment, thereby ensuring that it will only function in that equipment.

Having described in sufficient measure the nature of the present invention, and how to put it into practice, it is not considered necessary to go into greater explanatory lengths, since any expert in the subject would easily understand its scope and the benefits it brings. It is hereby recorded that among its essential features is that of the possibility of it being put into practice in other ways that differ to a great extent from the example given here, with the protection also being extended to such cases, provided its fundamental operating principle is not altered, changed or modified in any way.

**Glossary of abbreviations and terms used.**

| | |
|---|---|
| CPU | - processor |
| RAM | - random access memory |
| ROM | - read only memory |
| HDD | - hard disk drive |
| FLASH memory | - volatile memory |
| RSA key | *- Rivest-Shaiqir-Adleinan* ciphered algorithm |
| DD | - disk drive |
| Ports | - communication devices |
| S/N | - serial number |
| HMAC-SHA256 | - encoding algorithm |
| AES256 | - Advanced 256-bit ciphering system. |

## Claims

1. METHOD TO GUARANTEE AND RESTRICT THE OPERABILITY AND FUNCTIONING OF A COMPUTER PROGRAMME EXCLUSIVELY TO THE SPECIFIC COMPUTER EQUIPMENT WHERE IT IS INSTALLED, **characterised in that** the installation of the software inn the equipment comprises the following phases:
- scanning of the hardware present **in that** equipment during the installation process, and identification of the parameters that are exclusive to it, to obtain the "hardware DNA signature" that makes it unique;
- use of the hardware DNA signature obtained to generate a K1 key;
- use of that K1 key to encrypt some relevant information for accessing the programme, such as passwords, private keys, licences codes and other data, in a ciphered data document.;
- then, the deletion of the K1 key and the data with the programme access information, and the saving of only the ciphered document with the data on the relevant access information, which can only be decrypted in order to use the programme by regenerating the K1 key, which in turn can only be generated using the equipment hardware DNA signature.

2. METHOD TO GUARANTEE AND RESTRICT THE OPERABILITY AND FUNCTIONING OF A COMPUTER PROGRAMME EXCLUSIVELY TO THE SPECIFIC COMPUTER EQUIPMENT WHERE IT IS INSTALLED, as set out in claim 1, **characterised in that** the hardware scanning process present **in that** equipment during the installation to identify the parameters that are exclusive to it and obtain the "hardware DNA signature" consists of re-examining all the hardware in the equipment (processor, communication ports, etc.) that defines the parameters (such as capacity, frequency, IP address, user ID, serial number, type, make, etc.) generating n matrixes with the data obtained, to define which are constant and unique and using them, generate an initial matrix that is compared to a reference matrix obtained using the same repetitive process with similar reference equipment, giving rise to a final matrix with the parameters that are truly exclusive to the equipment and constitute the DNA signature identifying the equipment hardware.

3. METHOD TO GUARANTEE AND RESTRICT THE OPERABILITY AND FUNCTIONING OF A COMPUTER PROGRAMME EXCLUSIVELY TO THE SPECIFIC COMPUTER EQUIPMENT WHERE IT IS INSTALLED, as set out in claims 1 or 2, **characterised in that** the K1 key generated using the hardware DNA signature is also generated with an encrypted formula plus a fixed number.

4. METHOD TO GUARANTEE AND RESTRICT THE OPERABILITY AND FUNCTIONING OF A COMPUTER PROGRAMME EXCLUSIVELY TO THE SPECIFIC COMPUTER EQUIPMENT WHERE IT IS INSTALLED, as set out in claim 3m **characterised in that** the encrypted formula used together with the hardware DNA to generate the K1 key is an algorithm such as HMAC-SHA 256.
